# EUROPEAN PATENT APPLICATION

(11) **EP 4 716 336 A1**
(43) Date of publication of application: **25.03.2026**
(21) Application number: 24825827.9
(22) Date of filing: 14.06.2024
(51) Int. Cl.: H04W 72/0446, H04W 16/14, H04W 16/26, H04W 16/28, H04W 84/06

(54) **MOBILE COMMUNICATION SYSTEM**

(30) Priority: 22.06.2023 JP 2023102841
(71) Applicant: Softbank Corp., Tokyo 105-7529 (JP)
(72) Inventor: FUJII Teruya, Tokyo 105-7529 (JP); FUJII Takafumi, Tokyo 105-7529 (JP)
(74) Representative: SSM Sandmair
(86) International application number: PCT/JP2024/021647
(87) International publication number: WO 2024/262424

(57) **Abstract**

In a mobile communication system comprising an upper-airspace relay type base station having an antenna mounted on an upper-airspace flying body, etc. (including a UAV, a HAPS, and a communication satellite) and a terrestrial base station, it is intended to improve a frequency utilization efficiency, prevent a decrease in a communication capacity of a terminal, and reduce an interference in an uplink and a downlink of a service link of each base station. Each of the upper-airspace relay type relay base station and the terrestrial base station performs a service-link radio communication with a terminal by a TDD (Time Division Duplex) method using the same frequency. A transmission timing and a reception timing of the radio communication by the TDD method in the service link are reversed between the upper-airspace relay type base station and the terrestrial base station. The terrestrial base station estimates a direction to the service link antenna of the relay communication station, and controls a null of a directional beam of the service link antenna of the terrestrial base station so as to be directed in the estimated direction to the service link antenna of the relay communication station.

## Description

### TECHNICAL FIELD

The present invention relates to a mobile communication system including a base station capable of wirelessly communicating with a terminal.

### BACKGROUND ART

There is conventionally known a UAV that flies lower than an altitude of 18 km and a HAPS that flies in the stratosphere higher than an altitude of 18 km, as a flying body or floating body located in an upper airspace. There is also known a mobile communication system that is provided with an upper airspace relaying-type base station as a first base station that wirelessly communicates with a terminal via a service link antenna of a relay communication station mounted on a flying body or a floating body such as a UAV or HAPS (flying body), etc. located in an upper airspace, and a terrestrial base station as a second base station that wirelessly communicates with a terminal via an antenna disposed on land or at sea, and that shares the same frequency in the service link between the upper airspace relaying-type base station and the terrestrial base station, enabling a wireless communication between terminals of common specifications.

As a technology that can be applied to reduce an interference between an upper airspace relaying-type base station and a terrestrial base station in a mobile communication system, there is an interference control technology that adjusts and controls radio frames in the time domain (subframe units) on the premise that the upper airspace relaying-type base station and the terrestrial base station are time-synchronized with each other (see, for example, Patent Literature 1 and Non-Patent Literature 1). This interference control technology is a technology that complies with the LTE (Long Term Evolution)-Advanced standard, and is also called eICIC (enhanced Inter-Cell Interference Coordination).

### CITATION LIST

### PATENT LITERATURE

Patent Literature 1: Japanese Unexamined Patent Application Publication No. 2012-129793.

### NON-PATENT LITERATURE

Non-Patent Literature 1: "Overview of 3GPP", Release 10, V0.2.1 (2014-06).

### SUMMARY OF INVENTION

### TECHNICAL PROBLEM

When the above-described conventional interference control technology is applied, the upper airspace relaying-type base station and the terrestrial base station use the frequencies allocated to the service link in a time-division manner, so the radio signals used by the upper airspace relaying-type base station and the terrestrial base station are orthogonal on time axis and no mutual interference occurs. However, due to the time-division use of frequencies, neither the upper airspace relaying-type base station nor the terrestrial base station can use all of the frequencies allocated to the service link, which reduces the communication capacity (maximum transmission rate, peak throughput) of the terminals on each service link.

### SOLUTION TO PROBLEM

A mobile communication system according to an aspect disclosed in the present specification is a mobile communication system comprising an upper-airspace relay type base station that wirelessly communicates with a terminal via a service link antenna of a relay communication station mounted on a flying body or floating body located in the upper airspace, and a terrestrial base station disposed on land or at sea, and the upper-airspace relay type base station and the terrestrial base station are time-synchronized with each other. Each of the upper-airspace relay type relay base station and the terrestrial base station performs a service-link radio communication with a terminal by a TDD (Time Division Duplex) method using a same frequency. Transmission timing and reception timing of the radio communication of the TDD method in the service link are reversed between the upper-airspace relay type base station and the terrestrial base station. The terrestrial base station estimates a direction to the service link antenna of the upper-airspace relay type base station, and controls a null of a directional beam of the service link antenna of the terrestrial base station to be directed in the estimated direction to the service link antenna of the upper-airspace relay type base station.

In the foregoing mobile communication system, the upper-airspace relay type base station and the terrestrial base station may adjust transmission timings so that the transmission timings are reversed to each other by using time information acquired from a GNSS (Global Navigation Satellite System) receiver.

In the foregoing mobile communication system, the relay communication station mounted on the flying body or the floating body may be configured with a repeater relay apparatus (frequency-conversion repeater relay apparatus) that relays transmission and reception signals without regenerating them.

In the foregoing mobile communication system, the relay communication station mounted on the flying body or the floating body may be configured with a base station apparatus that regenerates transmission and reception signals, re-modulates the regenerated signals, and relays them.

In the foregoing mobile communication system, the terrestrial base station may receive location information acquired by the GNSS (Global Navigation Satellite System) receiver mounted on the flying body or the floating body via a gateway apparatus, and estimate the direction to the service link antenna of the relay communication station with reference to location information on its own base station.

In the foregoing mobile communication system, the terrestrial base station may have an array antenna as the service link antenna, measure a radio-wave arrival direction from the service link antenna of the relay communication station using the array antenna, and estimate the direction to the service link antenna of the relay communication station, from a result of the measurement.

In the foregoing mobile communication system, an inter-base station cooperation control apparatus that performs control between the upper-airspace relay type base station and the terrestrial based base station may be further comprised, and the inter-base station cooperation control apparatus may adjust transmission timing so that the transmission and reception are reversed to each other, by using time information on GNSS (Global Navigation Satellite System) received by the upper-airspace relay base station and then received via a gateway apparatus, and time information on GNSS (Global Navigation Satellite System) received by the terrestrial base station.

In the foregoing mobile communication system, an inter-base station cooperation control apparatus that performs control between the upper-airspace relay type base station and the terrestrial based base station may be further comprised, location information acquired by the GNSS (Global Navigation Satellite System) receiver mounted on the flying body or the floating body may be transferred to the terrestrial base station via the gateway apparatus and the inter-base station cooperation control apparatus, and the terrestrial base station may estimate the direction to the service link antenna of the relay communication station with reference to location information on its own terrestrial base station.

In the foregoing mobile communication system, the flying body or the floating body may be a communications satellite, a UAV (Unmanned Aerial Vehicle) flying at an altitude of 18 km or less, or a HAPS flying in the stratosphere at an altitude of 18 km or more.

According to the mobile communication system disclosed in the present specification, it is possible to reduce an interference that is given by a downlink-transmission signal from a service link antenna (upper-airspace relay type base station antenna) of a relay communication station disposed on an flying body or floating body located in the upper airspace, to uplink-reception signals of a service link antenna (terrestrial-base station antenna) of a terrestrial base station, and reduce an interference caused by a downlink-transmission signal from the terrestrial-base station antenna to an uplink-reception signal of the upper-airspace relay type base station antenna.

### BRIEF DESCRIPTION OF DRAWINGS

[FIG. 1] FIG. 1 is a diagram showing an example of an overall configuration of a mobile communication system according to an embodiment.
[FIG. 2A] FIG. 2A is a diagram showing a configuration example of a relay communication station configuring an example of a HAPS base station that constitutes the mobile communication system of the embodiment.
[FIG. 2B] FIG. 2B is a diagram showing a configuration example of a HAPS-GW, which corresponds to FIG. 2A.
[FIG. 3A] FIG. 3A is a diagram showing a configuration example of a relay communication station configuring another example of a HAPS base station that constitutes the mobile communication system of the embodiment.
[FIG. 3B] FIG. 3B is a diagram showing a configuration example of a HAPS-GW, which corresponds to FIG. 3A.
[FIG. 4A] FIG. 4A is a diagram showing an example of interference from a HAPS downlink to a terrestrial-base station terminal when a HAPS base station is applied to a system configuration of a reference example.
[FIG. 4B] FIG. 4B is a diagram showing an example of interference from a terrestrial-base station terminal to an uplink when a HAPS base station is applied to the current configuration.
[FIG. 5] FIG. 5 is a diagram showing an arrangement example of time slots of radio resources that are respectively set in HAPS base station and the terrestrial base station to which an enhanced Inter-Cell interference Coordination technology (eICIC) is applied when a HAPS base station is applied to the system configuration of the reference example.
[FIG. 6A] FIG. 6A is a diagram showing an uplink and a downlink between a terrestrial base station and a terrestrial-base station terminal when a TDD (Time Division Duplex) method is used as the transmission method for the service link in the mobile communication system according to the embodiment.
[FIG. 6B] FIG. 6B is a diagram showing an example of a frequency band in which the same frequency is shared in uplink and downlink links between the terrestrial base station and the terrestrial-base station terminal in the TDD method.
[FIG. 6C] FIG. 6C is a diagram showing an arrangement example of time slots for uplink and downlink links between the terrestrial base station and the terrestrial-base station terminal in the TDD method.
[FIG. 7] FIG. 7 is a diagram showing an arrangement example of time slots for uplink and downlink links when a synchronization control is performed to synchronize a transmission timing and a reception timing among a plurality of terrestrial base stations in a system configuration using a conventional TDD method.
[FIG. 8A] FIG. 8A is a diagram showing an example of interference in downlink when a transmission timing and a reception timing are synchronized among a plurality of terrestrial base stations by the synchronization control in the system configuration using the conventional TDD method.
[FIG. 8B] FIG. 8B is a diagram showing an example of interference in uplink when a transmission timing and a reception timing are synchronized among a plurality of terrestrial base stations by the synchronization control in the system configuration using the conventional TDD method.
[FIG. 9] FIG. 9 is a diagram showing an arrangement example of time slots for uplink and downlink links when a synchronization control is performed to reverse a transmission timing and a reception timing between the terrestrial base station and the HAPS base station using the TDD method in the mobile communication system according to the embodiment.
[FIG. 10A] FIG. 10A is a diagram showing an example of interference from the terrestrial base station to the uplink of the HAPS base station when a synchronization control is performed to reverse a transmission timing and a reception timing between the terrestrial base station and the HAPS base station.
[FIG. 10B] FIG. 10B is a diagram showing an example of interference from the HAPS base station to the uplink of the terrestrial base station when a synchronization control is performed to reverse a transmission timing and a reception timing between the terrestrial base station and the HAPS base station.
[FIG. 10C] FIG. 10C is a diagram showing the interferences of FIGS. 10A and 10B summarizing together.
[FIG. 11A] FIG. 11A is a diagram showing a reduction in interference from the terrestrial base station to the uplink of the HAPS base station when a null-forming is applied to a beam forming in the antenna of the terrestrial base station according to the embodiment.
[FIG. 11B] FIG. 11B is a diagram showing a reduction in interference from the HAPS base station to the uplink of the terrestrial base station when a null-forming is applied to a beam forming in the antenna of the terrestrial base station according to the embodiment.
[FIG. 11C] FIG. 11C is a diagram showing the interference reductions of FIGS. 11A and 11B summarizing together.
[FIG. 12A] FIG. 12A is a diagram showing an example of an antenna and a base station apparatus of the terrestrial base station according to the embodiment.
[FIG. 12B] FIG. 12B is a diagram showing an example of beamforming in the terrestrial base station.
[FIG. 13] FIG. 13 is a diagram showing an example of beamforming control of a terrestrial base station using a HAPS-mounted GPS receiver via an inter-base station cooperation control apparatus in the mobile communication system according to the embodiment.
[FIG. 14] FIG. 14 is a diagram showing an example of a main configuration of an antenna and a base station apparatus when a beamforming control is performed using a HAPS-mounted GPS receiver in the terrestrial base station according to the embodiment.
[FIG. 15] FIG. 15 is a diagram showing an example of a main configuration of the antenna and the base station apparatus of the terrestrial base station when beamforming control is performed by estimating a radio-wave arrival direction from the HAPS in the terrestrial base station according to the embodiment.
[FIG. 16] FIG. 16 is a diagram showing another example of a main configuration of the antenna and the base station apparatus of the terrestrial base station when a beamforming control is performed by estimating a radio-wave arrival direction from the HAPS in the terrestrial base station according to the embodiment.
[FIG. 17] FIG. 17 is a diagram showing an example of control of transmission and reception timings between the terrestrial base station and the HAPS base station according to the embodiment.
[FIG. 18] FIG. 18 is a diagram showing an example of control of transmission and reception timings between the terrestrial base station and the HAPS base station according to the embodiment.

### DESCRIPTION OF EMBODIMENTS

Hereinafter, various embodiments are described with reference to the drawings. It is noted that each drawing merely shows the shape, size, and positional relationship in a schematic manner to enable the contents of the present invention to be understood, and therefore the present invention is not limited to only the shape, size, and positional relationship exemplified in each drawing. Furthermore, the numerical values exemplified below are merely preferred examples of the present invention, and therefore the present invention is not limited to the exemplified numerical values.

In the present embodiment, although an example of a mobile communication system, in which the same frequency is shared between a HAPS base station (HAPS cellular system) as an upper airspace relaying-type base station and a terrestrial base station (terrestrial cellular system), is mainly described, the present invention can also be applied to a mobile communication system in which the relay communication station of the upper airspace relaying-type base station is disposed on a flying body or floating body other than the HAPS.

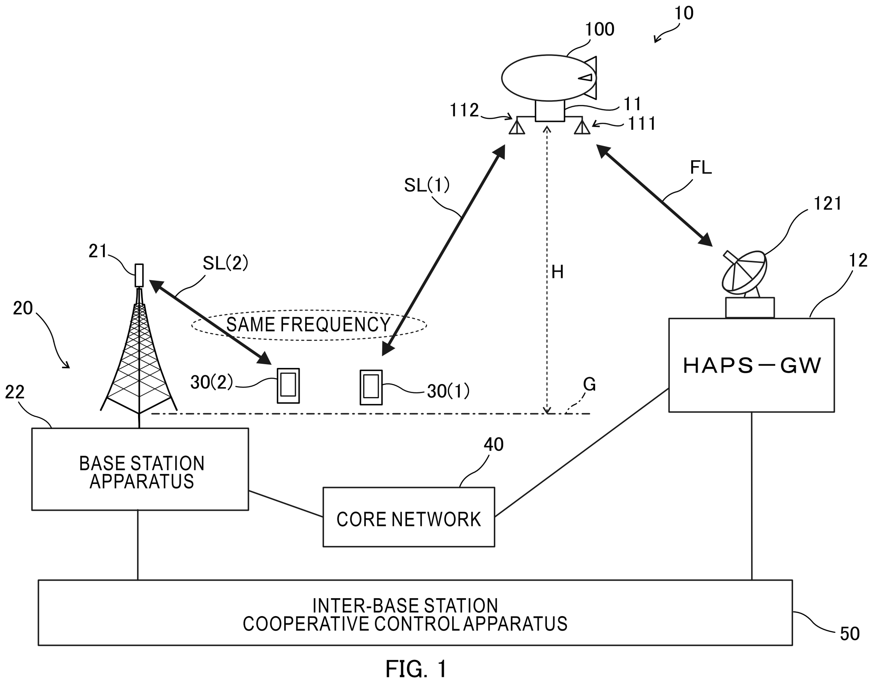

FIG. 1 is a diagram showing an example of a configuration of a mobile communication system (mobile phone system) according to an embodiment of the present invention. In FIG. 1, the mobile communication system of the present embodiment is provided with a HAPS base station (HAPS cellular system) 10 as a first base station (upper airspace relaying-type base station) and a terrestrial base station (terrestrial cellular system) 20 as a second base station, as a plurality of base stations capable of performing radio communications with terminals 30.

The HAPS base station 10 wirelessly communicates with a terminal (hereinafter also referred to as a "HAPS-base station terminal") 30(1) via a service link antenna (also referred to as a "HAPS-base station antenna") 112 of a relay communication station 11 provided on a HAPS ("High Altitude Pseudo Satellite" or "High Altitude Platform Station") 100, which serves as a flying body or a floating body located in the upper airspace. The HAPS 100 is provided with, for example, at least one of a battery and a solar-power generation system, and is capable of flying by the electric power. The HAPS 100 may be a solar plane-type HAPS, other than the airship-type HAPS as shown in the figure. Furthermore, the flying body or the floating body, in which the relay communication station 11 is disposed, may be, not only the HAPS but also an artificial satellite (for example, a communication satellite), a balloon, or an unmanned aerial vehicle (UAV: Unmanned Aerial Vehicle) such as a drone or UAS (Unmanned Aircraft Systems), etc. Moreover, the flying body or the floating body such as the HAPS 100 or a UAV, etc. may fly with at least one of a battery and an engine as a power source. The UAV may be, for example, an unmanned aircraft that runs on fuel, or a drone that runs on the battery, etc.

The HAPS 100, in which the relay communication station 11 is mounted, may be, for example, controlled to be located by floating or flying in an airspace (floating airspace) where the altitude H from the ground G (or the sea level) is equal to or less than 100 km by autonomous control or external control. The airspace, in which the HAPS 100 is located, may be, for example, the stratospheric airspace where the altitude H is equal to or greater than 18 km and equal to or less than 50 km. This airspace may be an airspace with relatively stable weather conditions at an altitude of equal to or greater than 15 km and equal to or less than 25 km, and in particular the airspace is an airspace at an altitude of approximately 20 km. The airspace may be an airspace at an altitude of equal to or greater than 0.1 km and equal to or less than 18 km for UAVs. The airspace may be an airspace at an altitude of equal to or greater than 0.05 km for drones.

The relay communication station 11 is provided with an antenna section for feeder link (hereinafter also referred to as an "FL antenna") 111 and an antenna section for service link (HAPS base station antenna) 112. The relay communication station 11 can perform a feeder-link FL communication with a gateway apparatus for HAPS (hereinafter referred to as "HAPS-GW") 12 that is disposed on land (or at sea), via the FL antenna 111. The FL antenna 111 is, for example, an array antenna in which a pointing direction can be controlled as described later, and may be a Massive antenna in which a large number of antenna elements are disposed two-dimensionally and the directivity in the horizontal and vertical directions can be controlled.

The relay communication station 11 can perform a service-link SL(1) communication with a HAPS-base station terminal 30(1) via the HAPS base station antenna 112. The HAPS base station antenna 112 is, for example, an array antenna in which a pointing direction can be controlled, and may be a Massive antenna in which a large number of antenna elements are disposed two-dimensionally and the directivity in the horizontal and vertical directions can be controlled.

The HAPS-GW 12 is connected to the core network 40 of the mobile communication network via a wired or wireless communication line, and is provided with an antenna section for feeder link (hereinafter also referred to as an "FL antenna") 121 that is a parabolic antenna, a Massive antenna capable controlling the directivity in the horizontal and vertical directions, etc. The HAPS-GW 12 can perform a feeder-link FL communication with the HAPS-mounted relay communication station 11 via the FL antenna 121.

The terrestrial base station 20 is provided with an antenna section (hereinafter also referred to as a "terrestrial-base station antenna") 21 and a base station apparatus 22 connected to the core network 40 of the mobile communication network via a wired or wireless communication line such as an optical fiber. The base station apparatus 22 can perform a service-link SL(2) communication with a terminal (hereinafter also referred to as a "terrestrial-base station terminal") 30(2) via the terrestrial-base station antenna 21. The terrestrial-base station antenna 21 is, for example, an array antenna in which a pointing direction can be controlled, and may be a Massive antenna in which a large number of antenna elements are disposed two-dimensionally and the directivity in the horizontal and vertical directions can be controlled.

Each of the HAPS-GW 12 of the HAPS base station 10 and the base station apparatus 22 of the terrestrial base station 20 is connected to an inter-base station cooperation control apparatus (also called an "inter-base station network cooperation control apparatus" or "inter-system cooperation control apparatus") 50 via a wired or wireless communication line such as an optical fiber. The HAPS base station 10 and the terrestrial base station 20 are time-synchronized with each other via the inter-base station cooperation control apparatus 50, and a timing control is performed so that the HAPS base station 10 and the terrestrial base station 20 have opposite transmission and reception timings.

Each of the HAPS base station 10 and the terrestrial base station 20 is configured using hardware such as, for example, a computer apparatus having a CPU, a memory, etc., an external-communication interface section for the core network 40 and the inter-base station cooperation control apparatus 50, a radio communication section, and the like, and is capable of performing a radio communication between the HAPS-base station terminal 30(1) and the terrestrial-base station terminal 30(2), and is capable of performing a communication with the core network 40 and the inter-base station cooperation control apparatus 50, by executing a predetermined program.

In the mobile communication system of the present embodiment, the same radio transmission method is used for the service-link SL(1) communication of the HAPS base station 10 and the service-link SL(2) communication of the terrestrial base station 20, and the same frequency is shared to improve a frequency efficiency of the service links. As for the radio transmission method, the TDD (Time Division Duplex) method is to be used, which uses the same frequency for both transmission and reception by time division, and, for example, a TDD method such as a communication method for the LTE (Long Term Evolution) or the LTE-Advanced, a communication method for the 4th generation mobile phones, and the communication method for the 5th generation mobile phones or subsequent next-generation mobile phones.

The HAPS-base station terminal 30(1) that can connect to and communicate with the HAPS base station 10 and the terrestrial-base station terminal 30(2) that can connect to and communicate with the terrestrial base station 20 are mobile communication terminals 30 with the same specifications. The terminal 30 is a mobile phone, a smartphone, a portable personal computer with a function of mobile communication, or the like, and is also called a mobile terminal, user equipment (UE), a mobile station, a mobile device, or a portable communication terminal. The terminal 30 may be a modular mobile station incorporated into a vehicle such as an automobile or a mobile object such as a drone, or may be a terminal apparatus for an IoT (Internet of Things) device.

The terminal 30 is configured using hardware, for example, such as a computer apparatus having a CPU, a memory, etc., a radio communication section and the like, and is capable of performing a radio communication with each of the HAPS base station 10 and the terrestrial base station 20, etc., by executing a predetermined program.

The HAPS base station 10 of the present embodiment is configured with the relay communication station 11 mounted on the HAPS 100 in the upper airspace, or is configured with the relay communication station 11 and the HAPS-GW 12 disposed on land (or at sea).

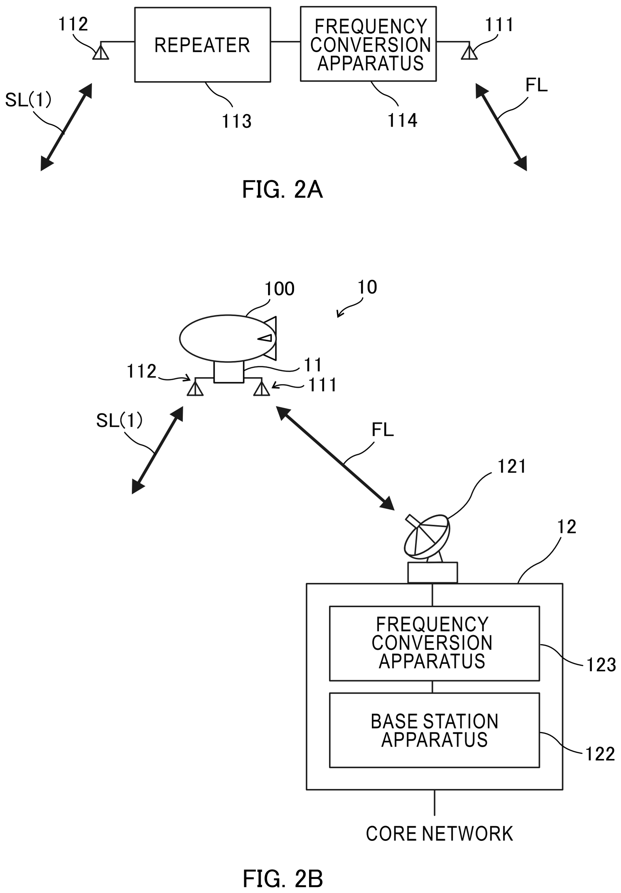

FIG. 2A is a diagram showing a configuration example of the relay communication station 11 configuring an example of the HAPS base station 10 in the mobile communication system of the embodiment. In the present configuration example, the relay communication station 11 is a radio relay apparatus (hereinafter referred to as a "frequency conversion repeater") for converting the feeder-link frequency that is a frequency different from the service link. In the downlink, the relay communication station 11 converts the feeder-link frequency transmitted from the HAPS-GW 12 into the service-link frequency, and performs a transmission to the HAPS-base station terminal 30(1). On the other hand, in the uplink, the relay communication station 11 converts the service-link frequency transmitted from the HAPS-base station terminal 30(1) into the feeder-link frequency, and performs a transmission to the HAPS-GW 12.

The relay communication station 11 of the HAPS base station 10 in the present example is configured with a repeater-relay apparatus (frequency-conversion repeater) having a repeater 113 and a frequency conversion apparatus 114. The repeater 113 includes a low-noise amplifier that amplifies the reception signal of the service link SL(1) received via the HAPS base station antenna 112, a power amplifier that amplifies the transmission signal of the service link SL(1) transmitted via the HAPS base station antenna (SL antenna) 12, and the like. The frequency conversion apparatus 114 performs a conversion between the service-link SL(1) frequency and the feeder-link FL frequency.

FIG. 2B is a diagram showing a configuration example of the HAPS-GW 12, which corresponds to FIG. 2A. The HAPS-GW 12 in the present example includes a base station apparatus 122 and a frequency conversion apparatus 123. The base station apparatus 122 includes a baseband processing apparatus that processes baseband signals of the service link, a communication interface section for communicating with the core network 40 via a backhaul line, and the like. The frequency conversion apparatus 123 performs a frequency conversion between the frequency of the service link signal input to and output from the base station apparatus 122 and the frequency of the feeder link signal transmitted/received via the FL antenna 121. The HAPS-GW 12 includes a function of communicating with the inter-base station cooperation control apparatus 50, in order to adjust the transmission and reception timings of the service link SL with the terrestrial base station 20 and to transfer the location information of the HAPS 100.

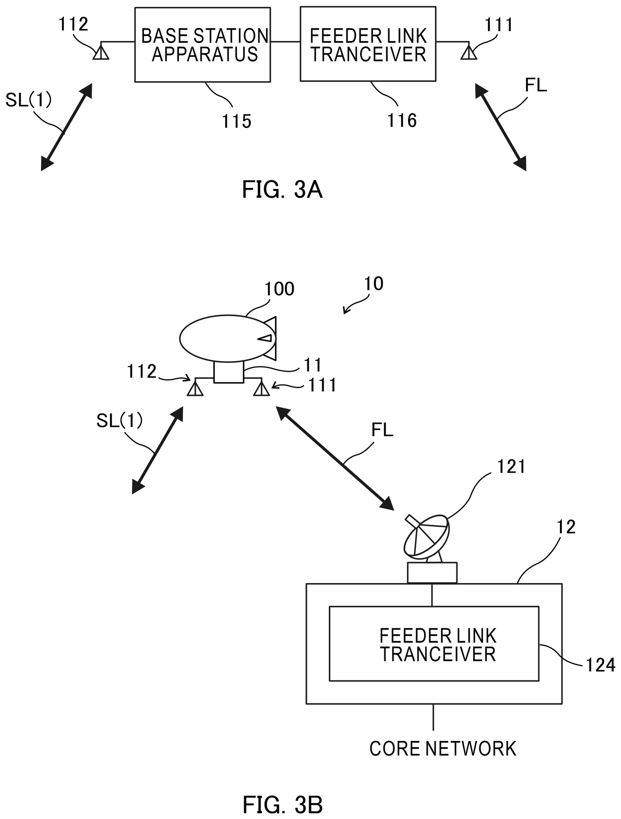

FIG. 3A is a diagram showing a configuration example of the relay communication station 11 configuring another example of the HAPS base station 10 in the mobile communication system of the embodiment. In the present configuration example, the relay communication station 11 of the HAPS base station 10 is configured with a base station apparatus similar to that of a normal terrestrial base station, and a feeder link transceiver in which the feeder link between the relay communication station 11 of the HAPS base station 10 and the HAPS-GW uses a frequency different from that of the service link. Unlike the service link, the feeder link can select the optimum radio transmission method as needed.

The relay communication station 11 of the HAPS base station 10 in the present example includes a base station apparatus 115 equivalent to the terrestrial-base station apparatus 22, and a feeder link transceiver 116. The base station apparatus 115 includes a low-noise amplifier that amplifies a reception signal of the service link SL(1) received via the HAPS base station antenna 112, a power amplifier that amplifies a transmission signal of the service link SL(1) to be transmitted via the HAPS base station antenna 112, and a baseband processing apparatus that processes a baseband signal of the service link. The feeder link transceiver 116 transmits and receives signals of the backhaul line transmitted to and received from the HAPS-GW 12 via the FL antenna 111.

FIG. 3B is a diagram showing a configuration example of the HAPS-GW 12, which corresponds to FIG. 3A. The HAPS-GW 12 in the present example includes a feeder link transceiver 124. The feeder link transceiver 124 transmits and receives signals of the backhaul line, which are transmitted to and received from the relay communication station 11 in the upper airspace mounted on the HAPS 100 via the FL antenna 121. Moreover, the feeder link transceiver 124 communicates with the core network 40 via the backhaul link. Furthermore, the HAPS-GW 12 includes a function of communicating with the inter-base station cooperation control apparatus 50, in order to adjust the transmission and reception timings of the service link SL with the terrestrial base station 20 and to transfer the location information of the HAPS 100.

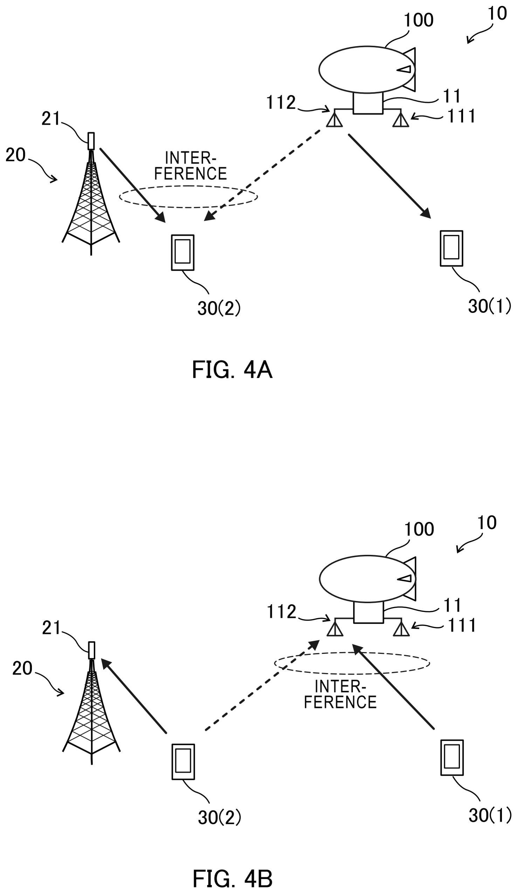

In a configuration having the HAPS base station 10 and the terrestrial base station 20 as shown in FIG. 1, if the HAPS base station 10 and the terrestrial base station 20 transmit radio waves at the same timing in the FDD method or the TDD method, or if the HAPS-base station terminal 30(1) and the terrestrial-base station terminal 30(2) transmit signals at the same timing, an interference may occur between the HAPS cellular system in the upper airspace and the terrestrial cellular system. For example, as shown in FIG. 4A, when transmitting a HAPS downlink signal from the relay communication station 11 mounted on the HAPS 100 in the upper airspace to the HAPS-base station terminal 30(1), the HAPS-downlink transmission signal may reach the terrestrial-base station terminal 30(2) that is receiving a terrestrial-downlink signal from the terrestrial base station 20, and an interference may occur from the HAPS downlink to the terrestrial-base station terminal 30(2). Furthermore, as shown in FIG. 4B, when transmitting a terrestrial-uplink signal from the terrestrial-base station terminal 30(2) to the terrestrial base station 20, the terrestrial-uplink transmission signal may reach the relay communication station 11 of the HAPS 100 in the upper airspace that is receiving a HAPS-uplink signal from the HAPS-base station terminal 30(1), and an interference may occur from the terrestrial-base station terminal 30(2) to the HAPS uplink of the relay communication station 11 mounted on the HAPS 100.

There is conventionally known an enhanced Inter-Cell Interference Coordination technology called eICIC, which complies with the above-mentioned LTE-Advanced standard, as a technology for controlling an interference between a plurality of base stations.

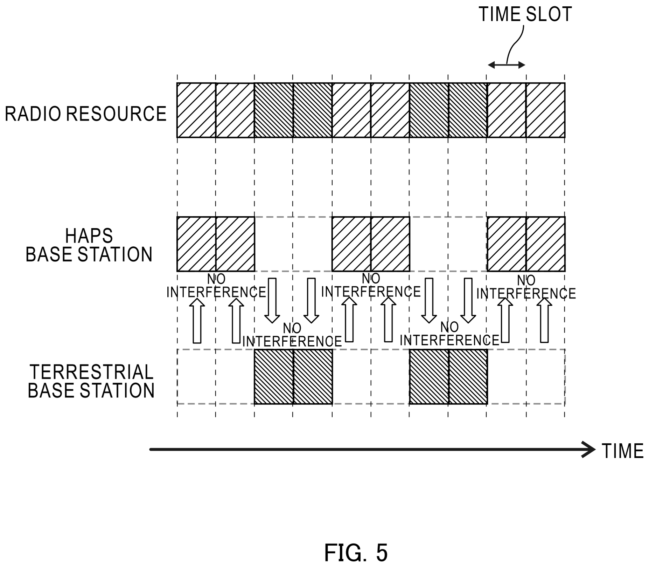

FIG. 5 is a diagram showing an arrangement example of time slots of radio resources that are respectively set in the HAPS base station 10 and the terrestrial base station 20, in the case that the enhanced Inter-Cell Interference Coordination technology (eICIC) is applied when the HAPS base station is applied to the system configuration of the reference example. As shown in FIG. 5, in the conventional enhanced Inter-Cell Interference Coordination technology (eICIC), the radio resources of the same frequency are time-divided, and the time slots different from each other are allocated to the HAPS base station 10 and the terrestrial base station 20, respectively. This makes it possible to mutually avoid interference at the same frequency between the HAPS base station 10 and the terrestrial base station 20, since the radio resources are orthogonal on time axis. However, in the conventional enhanced Inter-Cell Interference Coordination technology (eICIC), each of the HAPS base station 10 and the terrestrial base station 20 uses the radio resources (time slots) in a time-divided manner. As a result, all frequencies (all times) allocated to the mobile communication system of the embodiment cannot be used, and the communication capacity (maximum transmission rate, peak throughput) of the service link decreases for each of the HAPS base station 10 and the terrestrial base station 20. In particular, the communication capacity of the terrestrial-base station terminals connected to the terrestrial base station 20, which has a large number of terminals within its cell, decreases.

In the present embodiment, in order to avoid an interference between the HAPS base station 10 and the terrestrial base station 20 and to prevent a decrease in the communication capacity (maximum transmission rate, peak throughput) of the service link of each of the HAPS base station 10 and the terrestrial base station 20, the TDD (Time Division Duplex) method, which is adopted in standards such as the fifth generation of mobile communications, is used as a transmission and reception method for the service link of each of the base stations 10, 20.

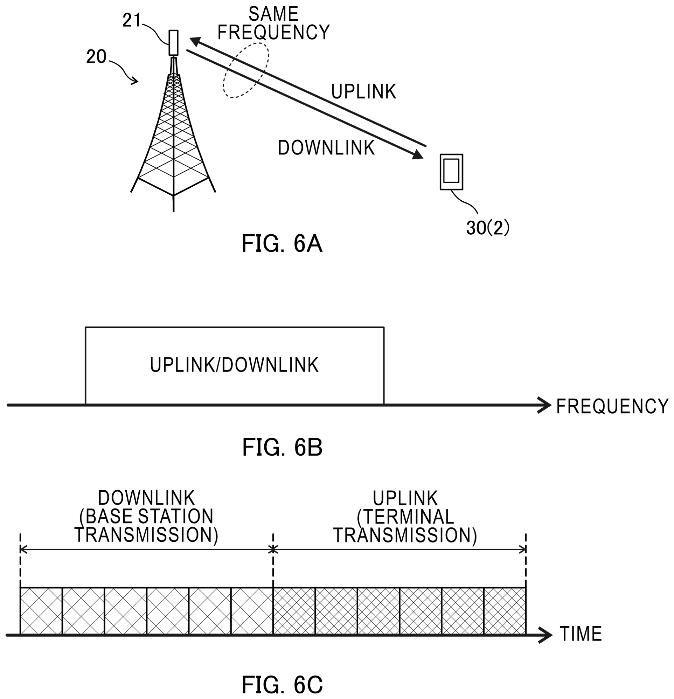

In the TDD (Time Division Duplex) method, the same frequency is used for the uplink and downlink, and the time slots are used in a time-division manner for the uplink and the downlink. For example, in the terrestrial base station 20, the same frequency is used for the uplink and the downlink between the terrestrial base station 20 and the terrestrial-base station terminal 30(2) as shown in FIGS. 6A and 6B. Then, as shown in FIG. 6C, the radio resources (time slots) on time axis are time-division multiplexed and utilized between the downlink transmission (base-station transmission) from the terrestrial base station 20 to the terrestrial-base station terminal 30(2) and the uplink transmission (terminal transmission) from the terrestrial-base station terminal 30(2) to the terrestrial base station 20.

When using the TDD (Time Division Duplex) method in the HAPS base station 10 and the terrestrial base station 20 of the present embodiment, by applying an interference reduction technique described below, which avoids an interference between the HAPS base station 10 and the terrestrial base station 20, the HAPS base station 10 and the terrestrial base station 20 can completely share the same frequency. Furthermore, the HAPS base station 10 and the terrestrial base station 20 can use all frequencies (all times) allocated to the mobile communication system, so that a decrease in the communication capacity of the service link of each of the base station 10, 20 can be prevented. In particular, it is possible to prevent a decrease in the communication capacity of the terrestrial-base station terminals connected to the terrestrial base station 20 having a large number of terminals within its cell.

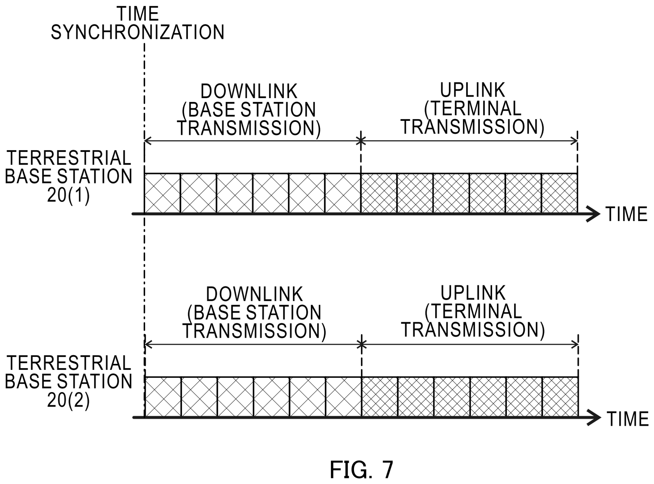

In a system using the conventional TDD method, in which the same frequency is shared by plural base stations, in order to avoid an interference between the uplink and the downlink of each of the base stations, for example, as shown in FIG. 7, between the plural base stations 20(1) and 20(2), a synchronization control is performed, so that the transmission timings of the base-station transmissions of the downlink for transmission from the base station to the terminal are synchronized with other, and so that the transmission timings of the terminal transmissions of the uplink for transmission from the terminal to the base station are synchronized with other.

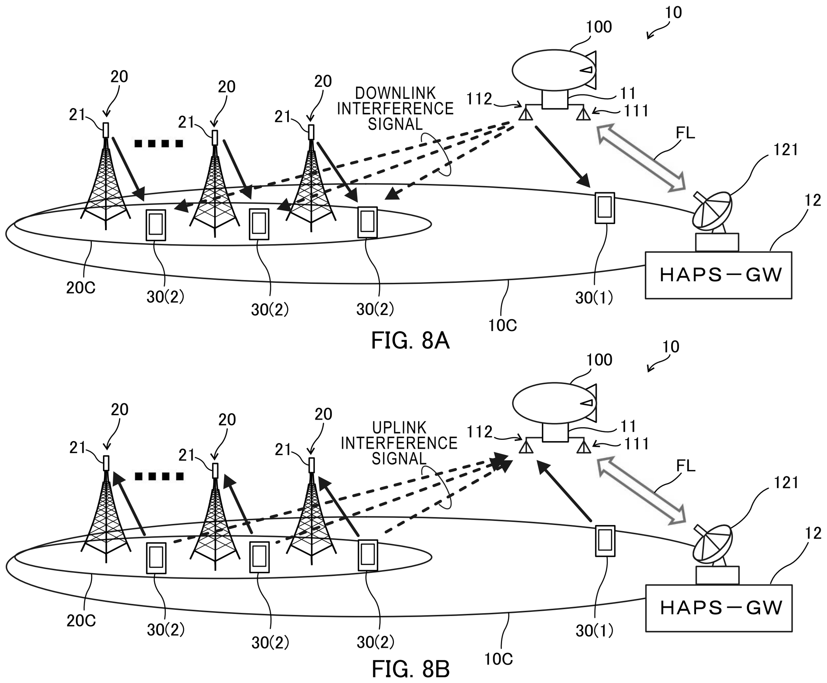

When a communication method of a terrestrial cellular system using the terrestrial base station 20 (hereinafter referred to as the "terrestrial cellular method") and a communication method of a HAPS cellular system using the HAPS base station 10 (hereinafter referred to as the "HAPS cellular method") are used simultaneously, particularly on the downlink of the service link as shown in FIG. 8A, interference waves from the HAPS base station 10 that transmits signals over a wide area may degrade the communication quality of a large number of terrestrial-base station terminals 30(2) located in the terrestrial cell 20C, and on the uplink as shown in FIG. 8B, signals transmitted by a large number of terrestrial-base station terminals 30(2) may degrade the communication quality of the HAPS-base station terminal 30(1) located in the HAPS cell 10C. Therefore, in order to simultaneously use the terrestrial cellular system and the HAPS cellular system, it is necessary to reduce the interference.

In the mobile communication system of the present embodiment, the transmission timing and reception timing between the HAPS base station 10 and the terrestrial base station 20 are reversed to each other.

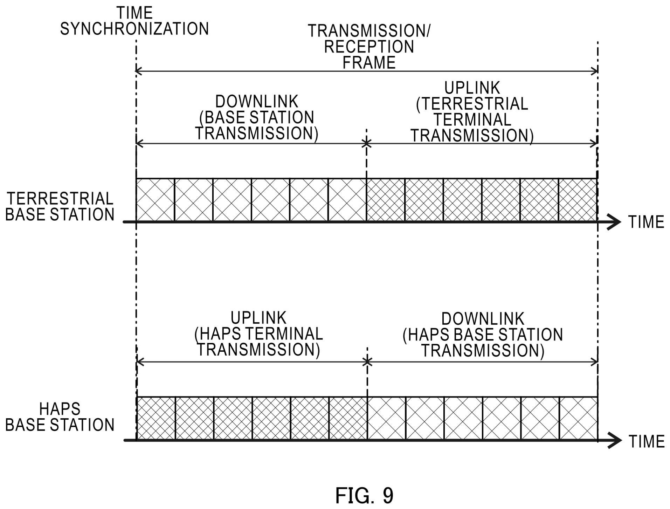

FIG. 9 is a diagram showing an arrangement example of time slots for uplink and downlink links when a synchronization control is performed to reverse the transmission timing and the reception timing between the terrestrial base station 20 and the HAPS base station 10 using the TDD method in the mobile communication system according to the embodiment. In each of a plurality of consecutive transmission/reception frames (radio frames) shown in FIG. 9, the transmission timing and the transmission period of the downlink from the terrestrial base station 20 to the terrestrial-base station terminal 30(2) are synchronized with the transmission timing and the transmission period of the uplink from the HAPS-base station terminal 30(1) to the HAPS base station 10. On the other hand, the transmission timing and the transmission period of the uplink from the terrestrial-base station terminal 30(2) to the terrestrial base station 20 are synchronized with the transmission timing and the transmission period of the downlink from the HAPS base station 10 to the HAPS-base station terminal 30(1).

Herein, the terrestrial base station 20 and the HAPS base station 10 may adjust their transmission timings to be reversed to each other using a time information acquired by a GNSS (Global Navigation Satellite System) receiver.

By reversing the transmission timing and reception timing of the HAPS base station 10 and the terrestrial base station 20 for the uplink and the downlink as shown in FIG. 9, the situation receiving the interference is changed significantly compared to when the transmission timing and the reception timing of the HAPS base station 10 and the terrestrial base station 20 are the same for the uplink and the downlink as shown in FIG. 7.

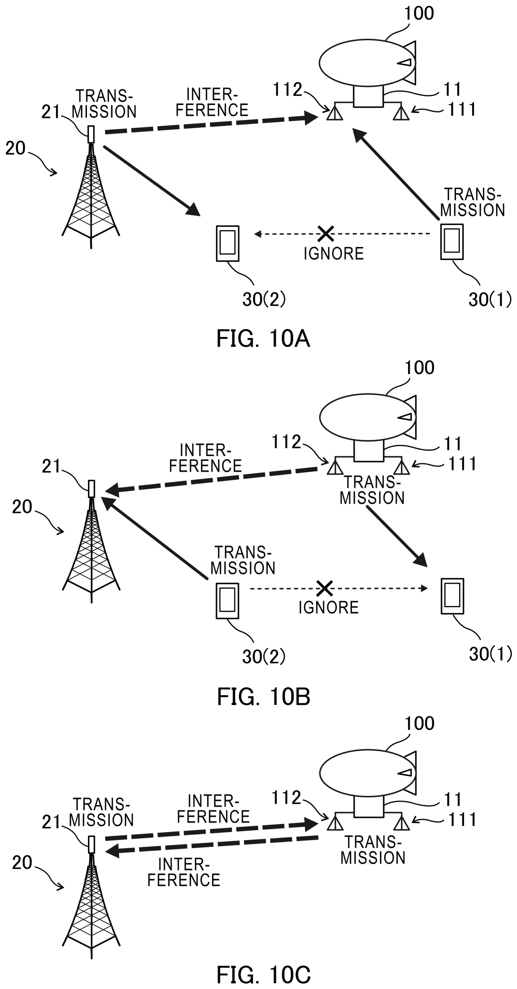

As shown in FIG. 10A, the downlink of the terrestrial base station 20 becomes the uplink of the service link of the HAPS base station 10. Therefore, the radio waves of downstream transmission transmitted from the terrestrial-base station antenna 21 reach the HAPS base station antenna 112 as shown in the figure, and the downlink of the terrestrial base station 20 interferes with the service-link uplink of the HAPS base station 10.

It is noted that, since the terrestrial-base station terminal 30(2) and the HAPS-base station terminal 30(1) are located at a relatively large distance and are both located on land, there are many obstructions, such as buildings, between the terminals. Therefore, the interference signal power received when the uplink-transmission signal of the HAPS-base station terminal 30(1) reaches the terrestrial-base station terminal 30(2) is generally negligibly small.

On the other hand, as shown in FIG. 10B, the uplink of the terrestrial base station 20 becomes the downlink of the service link of the HAPS base station 10. Therefore, the radio waves of downstream transmission of the service link transmitted from the HAPS base station antenna 112 reach the terrestrial-base station antenna 21 as shown in the figure, causing an interference with the uplink of the terrestrial base station 20.

It is noted that, since the HAPS-base station terminal 30(1) and the terrestrial-base station terminal 30(2) are located at a relatively large distance and are both located on land, there are many obstructions, such as buildings, between the terminals. Therefore, the interference signal power received when the uplink-transmission signal of the terrestrial-base station terminal 30(2) reaches the HAPS-base station terminal 30(1) is generally negligibly small.

Summarizing FIGS. 10A and 10B, when the terrestrial cellular system and the HAPS cellular system share the same frequency as shown in FIG. 10C, the interference can be put together into an interference between the terrestrial-base station antenna 21 and the service link antenna 112 of the HAPS base station. That is, if the interference between the terrestrial-base station antenna 21 and the service link antenna 112 of the HAPS base station is reduced, the terrestrial cellular system and the HAPS cellular system can share the same frequency.

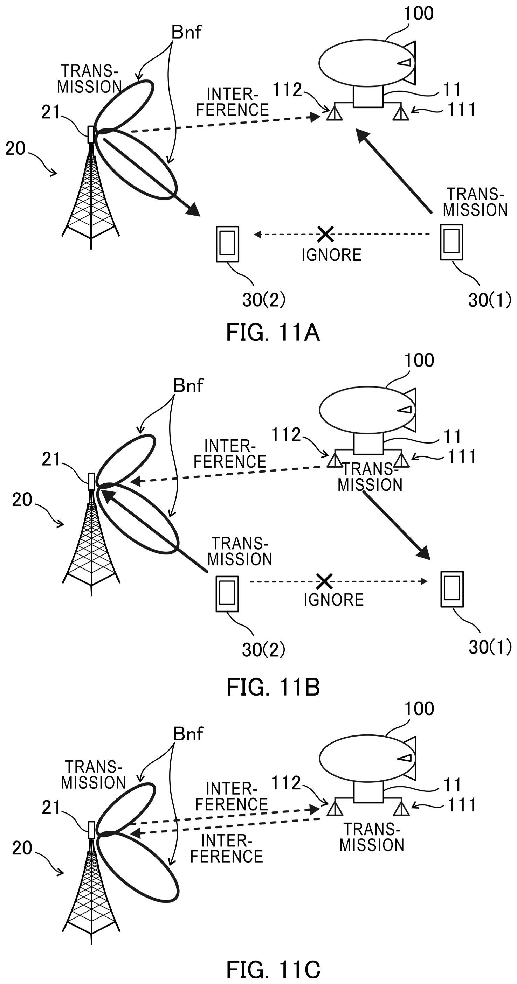

Therefore, in the present embodiment, the terrestrial base station 20 estimates the direction to the service link antenna 112 of the HAPS base station in the upper airspace, and applies a null-forming to direct a null of the directional beam of the terrestrial-base station antenna 21 in that direction, thereby simultaneously achieving a reduction of interferences as shown in FIGS. 11A and 11B. FIGS. 11A and 11B can be combined to form FIG. 11C, the proposed null-forming can simultaneously reduce the interference between the terrestrial-base station antenna 21 and the service link antenna 112 of the HAPS base station, and the terrestrial cellular system and the HAPS cellular system can share the same frequency.

The null-forming is a null-forming in which the directional null of the terrestrial-base station antenna 21 is directed in the direction to the HAPS base station antenna 112, thereby significantly suppressing the transmission power and reception power in that direction.

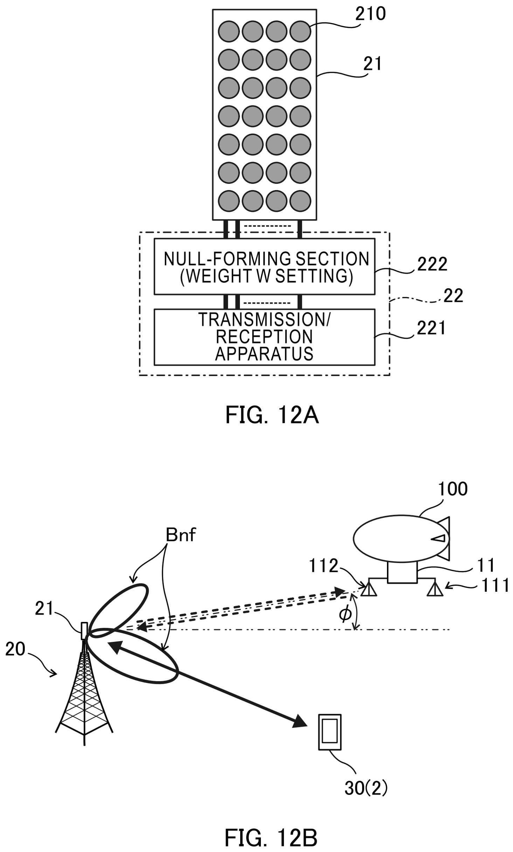

FIG. 12A is a diagram showing an example of the antenna 21 and the base station apparatus 22 of the terrestrial base station 20 according to the embodiment. FIG. 12B is a diagram showing an example of beamforming in the terrestrial base station 20. In the present embodiment, a Massive antenna that is an array antenna, in which a large number of antenna elements 210 are disposed two-dimensionally, is used as the terrestrial-base station antenna 21 as shown in FIG. 12A. The base station apparatus 22 is provided with a transmission/reception apparatus 221 and a null-forming section 222.

The null-forming section 222 performs a transmission signal process that generates amplitudes and phases for performing a predetermined null-forming on each of the signals transmitted via the plural antenna elements of the terrestrial-base station antenna 21 (hereinafter referred to as transmission null-forming weights), and generates transmission signals by superimposing the transmission null-forming weights on the transmission signals of the antenna elements that are outputted from the transmission/reception apparatus 221, and performs a reception signal process that generates amplitudes and phases for performing a predetermined null-forming on each of the reception signals received via the plural antenna elements of the terrestrial-base station antenna 21 (hereinafter referred to as reception null-forming weights), and generates reception signals for the transmission/reception apparatus 221 by superimposing the reception null-forming weights on the the reception signals. It is noted that, in the TDD method, the transmission null-forming weight and the reception null-forming weight may be the same.

The transmission and reception null-forming weights are calculated based on, for example, the direction to the HAPS base station (horizontal angle θ in the horizontal plane, elevation angle ϕ in the vertical plane) observed from the terrestrial base station using location information of the terrestrial-base station antenna 21 of the own station and location information of the HAPS base station antenna 112 (location information on the HAPS 100).

When the number of antenna elements in the terrestrial-base station antenna is very large, for example, when it is configured as Massive antenna, by appropriately controlling the transmission and reception null-forming weights generated by the null-forming section 222, it is possible to direct the directional null in the direction to the HAPS base station antenna 112, while directing the directional beam Bnf of the terrestrial-base station antenna 21 in the direction to the terrestrial-base station terminal 30(2).

Examples of the beamforming control with the null-forming described above include a method for generating the null-beamforming weights using location information acquired by a HAPS-mounted GNSS (Global Navigation Satellite System) receiver, and a control of scanning the beam across the horizontal and vertical planes at regular intervals of certain angles (Δθ, Δϕ) by the beamforming function of the terrestrial-base station antenna, measuring the reception power of the downlink signal transmitted by the service link antenna of the HAPS base station, estimating the direction with maximum reception power as the direction to HAPS, and generating the null-beamforming weight.

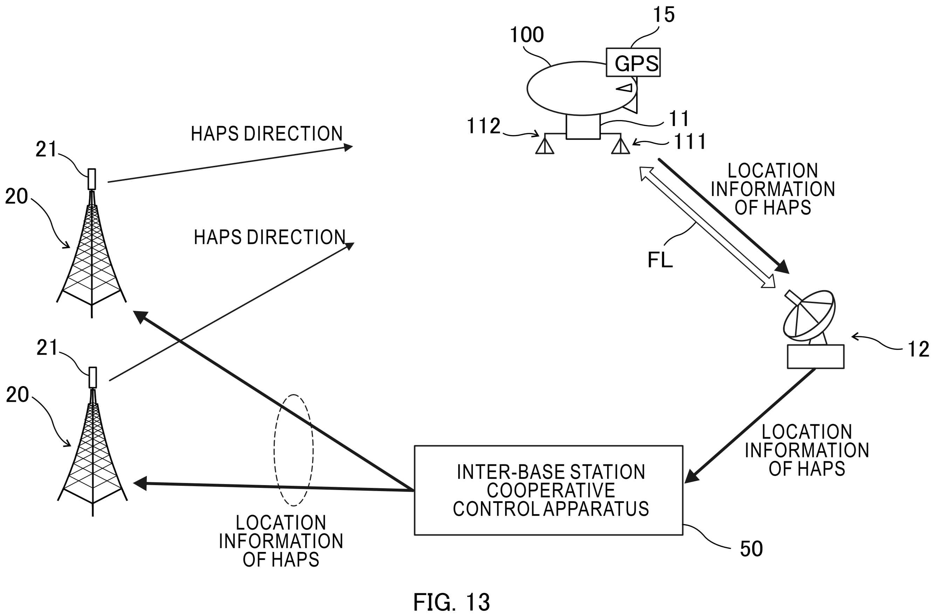

FIG. 13 is a diagram showing an example of beamforming control of the terrestrial base station 20 using a HAPS-mounted GPS receiver 15 via the inter-base station cooperation control apparatus 50 in the mobile communication system according to the embodiment. It is noted that, although the present example is an example in which the GNSS receiver is a GPS receiver 15 that receives signals from GPS artificial satellites, a GNSS receiver that receives signals from other GNSS artificial satellites other than GPS may also be used.

In FIG. 13, the HAPS 100 mounting the relay communication station 11 of the upper airspace is provided with the GPS receiver 15. The location information of the HAPS 100 acquired by the GPS receiver is transmitted from the relay communication station 11 to the HAPS-GW 12 via the feeder link FL. The HAPS-GW 12 transfers the location information of the HAPS 100, which is received from the relay communication station 11, to each of the terrestrial base station 20 via the inter-base station cooperation control apparatus 50.

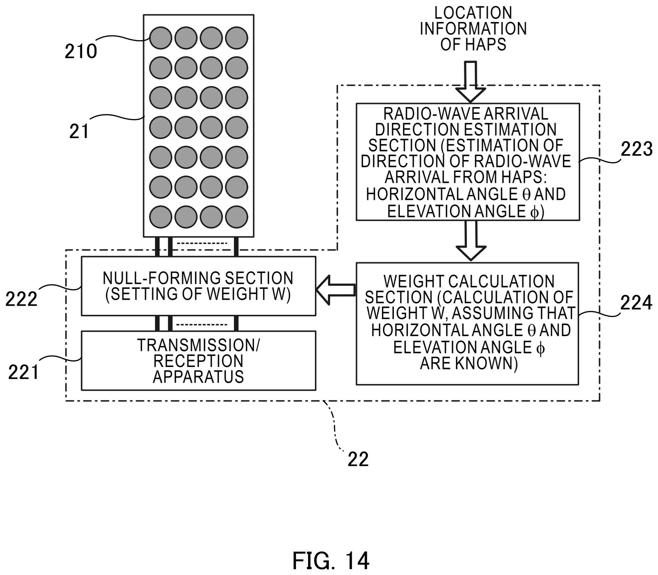

FIG. 14 is a diagram showing an example of the main configuration of the antenna 21 and the base station apparatus 22 when performing antenna null-forming using a HAPS-mounted GPS receiver in the terrestrial base station 20 according to the embodiment. It is noted that, in FIG. 14, parts common to those in FIG. 12A described above are denoted by the same reference numerals and descriptions thereof are omitted.

In FIG. 14, the base station apparatus 22 is provided with a radio-wave arrival direction estimation section 223 and a weight calculation section 224. The radio-wave arrival direction estimation section 223 calculates the horizontal angle θ and elevation angle ϕ of the direction to the HAPS 100 (the direction to the service antenna of the HAPS base station) with respect to the location of its own station, based on the location information of its own station and the location information of the HAPS 100 transferred via the inter-base station cooperation control apparatus 50. The weight calculation section 224 calculates the null-forming weight W by, for example, a directionally constrained minimization of power method DCMP (Directionally Constrained Minimization of Power) that is a null-forming technique, with the radio-wave arrival direction estimated by the radio-wave arrival direction estimation section 223 as a known value. The weight W calculated by the weight calculation section 224 is set in the null-forming section 222, and is superimposed on the transmission signal transmitted via each antenna element of the terrestrial-base station antenna 21 and the reception signal received via each antenna element of the terrestrial-base station antenna 21.

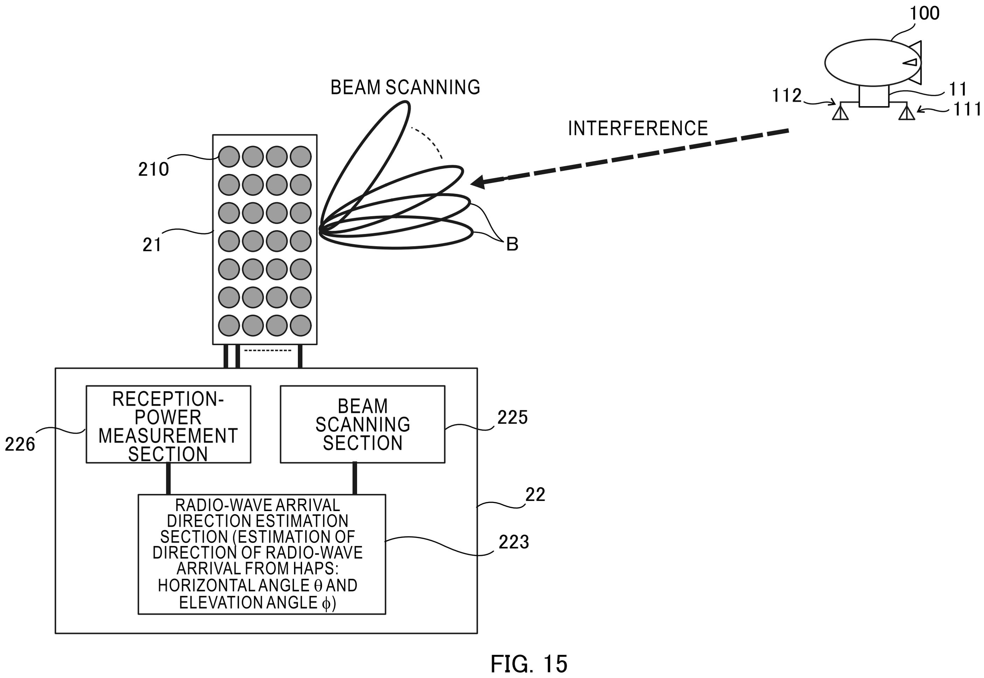

FIG. 15 is a diagram showing an example of the main configuration of the antenna 21 and base station apparatus 22 of the terrestrial base station 20 when estimating the HAPS radio wave arrival direction by beam scanning in the terrestrial base station 20 according to the embodiment. This example is an example of estimating the radio-wave arrival direction from the HAPS by beam scanning in the elevation direction of the vertical plane. In practice, the scanning is performed at regular angle (Δθ, Δϕ) intervals in the horizontal and vertical planes to search for the direction (θ, ϕ) = (nΔθ, mΔϕ) (n and m are integers) where the reception power is maximum. Generally, the direction with the maximum reception power is the direction to the service antenna of the HAPS base station. It is noted that, in FIG. 15, parts common to those in FIG. 12A and FIG. 14 described above are denoted by the same reference numerals and descriptions thereof are omitted.

In FIG. 15, the base station apparatus 22 is provided with a radio-wave arrival direction estimation section 223, a beam scanning section 225 and a reception-power measurement section 226. While the beam scanning section 225 scans on the vertical plane in the upper airspace with the beam B at a fixed angle, the reception power received via the antenna 21 is measured by the reception-power measurement section 226. The radio-wave arrival direction estimation section 223 determines the horizontal angle θ and elevation angle ϕ of the direction of the beam B at which the reception power is maximum, as the radio-wave arrival direction (horizontal angle θ and elevation angle ϕ) of the HAPS.

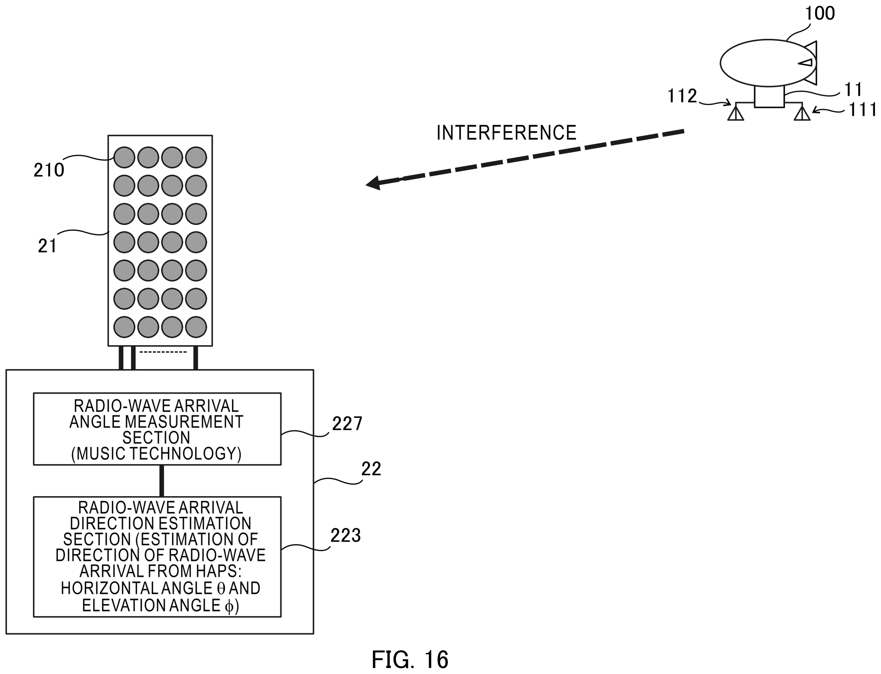

FIG. 16 is a diagram showing another example of the main configuration of the antenna 21 of the terrestrial base station 20 and the base station apparatus 22 when beamforming control is performed by estimating the radio-wave arrival direction from the HAPS in the terrestrial base station according to the embodiment. The example in FIG. 16 is an example of estimating the radio-wave arrival direction from the HAPS by estimating the radio-wave arrival angle. It is noted that, in FIG. 16, parts common to those in FIG. 12A and FIG. 14 described above are denoted by the same reference numerals and descriptions thereof are omitted.

In FIG. 16, the base station apparatus 22 is provided with a radio-wave arrival direction estimation section 223 and a radio-wave arrival angle measurement section 227. When performing the downlink transmission of the HAPS base station 10, the radio-wave arrival angle measurement section 227 uses the array antenna (Massive antenna) 21 to estimate the radio-wave arrival angle direction (horizontal angle θ, elevation angle ϕ) of the downlink by signal processing. An example of a technology for estimating the radio-wave arrival angle direction is a radio-wave arrival angle measurement technology "MUSIC technology". The radio-wave arrival direction estimation section 223 determines the radio-wave arrival angle direction (horizontal angle θ and elevation angle ϕ) estimated by the radio-wave arrival angle measurement section 227 as the radio-wave arrival direction (horizontal angle θ and elevation angle ϕ) of the HAPS.

Assuming that the radio-wave arrival direction (horizontal angle θ and elevation angle ϕ) of HAPS, which is estimated in each of FIGS. 15 and 16, is known, the above-described weight calculation section 224 calculates the weight W using, for example, the directionally constrained minimization of power method DCMP (Directionally Constrained Minimization of Power) that is a null-forming technology.

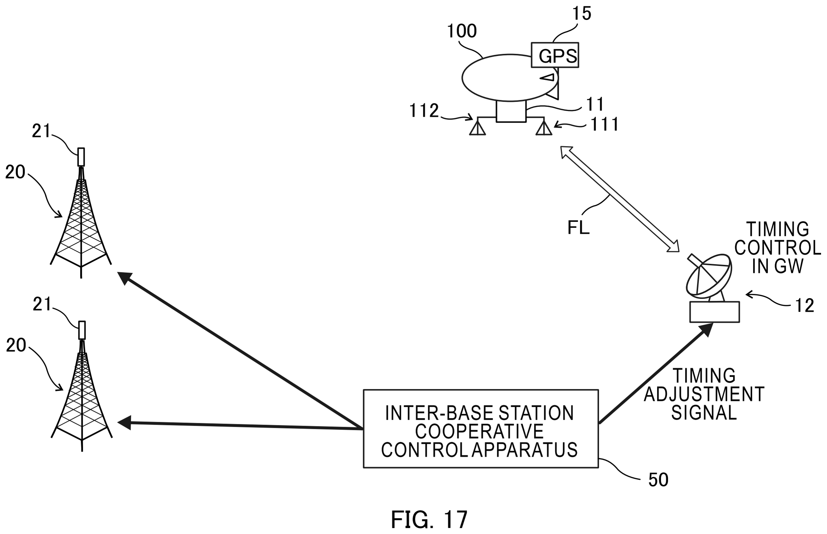

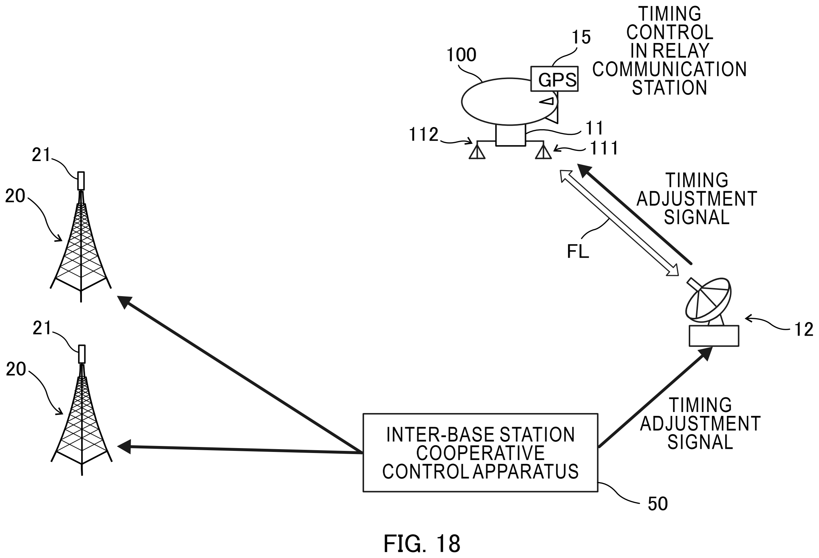

Each of FIGS. 17 and 18 is a diagram showing an example of control of transmission and reception timings between the terrestrial base station 20 and the HAPS base station 10 according to the embodiment. In the mobile communication system of the present embodiment, since the transmission and reception timings of the terrestrial base station 20 and the HAPS base station 10 must be reversed to each other, the inter-system (inter-base station) cooperation control apparatus 50 adjusts the transmission and reception timings of the terrestrial base station 20 and the HAPS base station 10 so that the transmission and reception frame times of the terrestrial base station 20 and the HAPS base station 10 are reversed to each other. In the example of FIG. 17, the transmission and reception timings are adjusted by the HAPS-GW 12. In the example of FIG. 18, the transmission and reception timings are adjusted by the relay communication station 11 mounted on the HAPS 100.

As described above, according to the present embodiment which uses the TDD method as the transmission and reception method, it is possible to share the same frequency in each of the service links between the terminals and each of the service link antenna (HAPS base station antenna) of the HAPS base station (first base station) and the service link antenna (terrestrial-base station antenna) of the terrestrial base station (second base station), and it is possible to overcome the problem of decrease in the communication capacity of the terminal in the enhanced Inter-Cell Interference Coordination technology (eICIC), etc., shown in FIG. 5 that enables sharing of the same frequency.

Further, in the present embodiment, in each of the service links between the terminal and each of the service link antenna (HAPS base station antenna) of the HAPS base station 10 and the service link antenna (terrestrial-base station antenna) of the terrestrial base station 20, while using the same frequency and the TDD method for transmission and reception method, the transmission and reception timings of the radio communication of the TDD method in the service link between the HAPS base station 10 and the terrestrial base station 20 are reversed to each other. As a result, the downlink of the service link of the terrestrial base station 20 has the same timing as the uplink of the service link of the HAPS base station 10, and there is no interference from the terminal (terrestrial-base station terminal) 30(2) communicating with the terrestrial base station 20 to the uplink of the service link of the HAPS base station 10, and only interference of the downlink of the service link transmitted from the terrestrial base station 20 occurs. On the other hand, the downlink of the service link of the HAPS base station 10 has the same timing as the uplink of the service link of the terrestrial base station 20, and the downlink of the service link of the HAPS base station 10 does not interfere with the downlink of the terrestrial-base station terminal 30(2) at all, but does interfere with the uplink of the service link of the terrestrial base station 20.

From the above-described result, the interference of the uplink and downlink of the service link between the HAPS base station 10 and the terrestrial base station 20 does not affect any interference to the terrestrial-base station terminal 30(2) and the HAPS-base station terminal 30(1) communicating with each of the base stations 10 and 20, and is the interference only between the HAPS base station 10 and the terrestrial base station 20.

Accordingly, in order to suppress the interference between the cell (HAPS cell) 10C formed by the HAPS base station 10 and the cell (terrestrial cell) 20C formed by the terrestrial base station 20, it is sufficient to simply suppress the interference between the HAPS base station 10 and the terrestrial base station 20.

Therefore, in the present embodiment, by directing the null of the directional beam of the terrestrial-base station antenna in the direction to the HAPS base station antenna, it is possible to reduce the interference that is given by the transmission signal of the downlink from the HAPS base station antenna to the reception signal of the uplink of the terrestrial-base station antenna, and it is also possible to reduce the interference that is given by the transmission signal of the downlink from the terrestrial-base station antenna to the reception signal of the uplink of the HAPS base station antenna.

Furthermore, according to the present embodiment, the frequency utilization rate can be doubled by sharing the frequency between the HAPS service link and the terrestrial base station.

Moreover, according to the present embodiment, this can be achieved by using a normal TDD method (5G, etc.) and changing the transmission and reception timings of the terrestrial base station 20 and the HAPS base station 10 (without any special changes).

Furthermore, according to the present embodiment, in the terrestrial base station 20, this can be achieved by the beam control that directs a null in the direction to the HAPS located above using a base-station array antenna that is commonly used in the 5G. No additional special apparatus is required. In particular, since the direction to the HAPS can be easily estimated using information such as GPS, etc. mounted on the HAPS, it is easy to perform the null control which directs the null in that direction.

In addition, according to the present embodiment, the HAPS base station 10 does not require any special apparatus or control for sharing the frequency.

Furthermore, according to the present embodiment, the transmission timing adjustment between the terrestrial base station 20 and the HAPS base station 10 can be easily achieved by the inter-system (base station) cooperation control apparatus 50.

Since the present invention can improve the frequency utilization efficiency at the HAPS base station and the terrestrial base station, prevent the decrease in the communication capacity at the terminals, and provide the system that can realize the frequency sharing between the HAPS base station and the terrestrial base station without adding any special apparatus to the HAPS base station and the terrestrial base station, it is possible to contribute to achieving Goal 9 of the Sustainable Development Goals (SDGs), which is to "Create a foundation for industry and technological innovation".

It is noted that, the process steps and configuration elements of the mobile communication system, the upper-airspace type relay base station, the HAPS cellular system, the terrestrial base station, the terrestrial cellular system, the relay communication station, the HAPS-GW, the terminal (user apparatus, mobile station, mobile device) and the inter-base station cooperation control apparatus described in the present description can be implemented with various means. For example, these process steps and configuration elements may be implemented with hardware, firmware, software, or a combination thereof.

With respect to hardware implementation, means such as processing units or the like used for establishing the foregoing steps and configuration elements in entities (for example, various kinds of radio communication apparatuses, radio relay apparatus, Node B, server, gateway, switch, computer, hard disk drive apparatus, or optical disk drive apparatus) may be implemented in one or more of an application-specific IC (ASIC), a digital signal processor (DSP), a digital signal processing apparatus (DSPD), a programmable logic device (PLD), a field programmable gate array (FPGA), a processor, a controller, a microcontroller, a microprocessor, an electronic device, other electronic unit, computer, or a combination thereof, which are designed so as to perform a function described in the present specification.

With respect to the firmware and/or software implementation, means for using to establish the foregoing configuration elements may be implemented with a program (for example, code such as procedure, function, module, instruction, etc.) for performing a function described in the present specification. In general, any computer/processor readable medium of materializing the code of firmware and/or software may be used for implementation of means such as processing units and so on for establishing the foregoing steps and configuration elements described in the present specification. For example, in a control apparatus, the firmware and/or software code may be stored in a memory and executed by a computer or processor. The memory may be implemented within the computer or processor, or outside the processor. Further, the firmware and/or software code may be stored in, for example, a medium capable being read by a computer or processor, such as a random-access memory (RAM), a read-only memory (ROM), a non-volatility random-access memory (NVRAM), a programmable read-only memory (PROM), an electrically erasable PROM (EEPROM), a FLASH memory, a floppy (registered trademark) disk, a compact disk (CD), a digital versatile disk (DVD), a magnetic or optical data storage unit, or the like. The code may be executed by one or more of computers and processors, and a certain aspect of functionalities described in the present specification may by executed by a computer or processor.

The description of embodiments disclosed in the present specification is provided so that the present disclosures can be produced or used by those skilled in the art. Various modifications of the present disclosures are readily apparent to those skilled in the art and general principles defined in the present specification can be applied to other variations without departing from the spirit and scope of the present disclosures. Therefore, the present disclosures should not be limited to examples and designs described in the present specification and should be recognized to be in the broadest scope corresponding to principles and novel features disclosed in the present specification.

### REFERENCE SIGNS LIST

10: HAPS base station (upper-airspace relay type base station)
10C: HAPS cell
11: relay communication station
12: HAPS-GW
15: GPS receiver
20: terrestrial base station
20C: terrestrial cell
21: terrestrial-base station antenna (service link antenna)
22: base station apparatus
30: terminal
31(1): HAPS-base station terminal
31(2): terrestrial-base station terminal
40: core network
50: inter-base station cooperation control apparatus
100: HAPS
111: FL antenna
112: HAPS base station antenna (service link antenna)
113: repeater
114: frequency converter
115: base station apparatus
116: feeder link transceiver
121: FL antenna
122: base station apparatus
123: frequency converter
124: feeder link transceiver
210: antenna element
221: transmission and reception apparatus
222: null-forming section
223: radio-wave arrival direction estimation section
224: weight calculation section
225: beam scanning section
226: reception-power measurement section
227: radio-wave arrival angle measurement section

## Claims

1. A mobile communication system comprising an upper-airspace relay type base station that wirelessly communicates with a terminal via a service link antenna of a relay communication station mounted on a flying body or floating body located in the upper airspace, and one or plural terrestrial base stations that wirelessly communicate with a terminal via a service link antenna disposed on land or at sea, wherein the upper-airspace relay type base station and the terrestrial base station are time-synchronized with each other,
wherein each of the upper-airspace relay type relay base station and the terrestrial base station performs a service-link radio communication with a terminal by a TDD (Time Division Duplex) method using a same frequency,
wherein a transmission timing and a reception timing of the radio communication of the TDD method in the service link are reversed between the upper-airspace relay type base station and the terrestrial base station, and
wherein the terrestrial base station estimates a direction to the service link antenna of the upper-airspace relay type base station, and controls a null of a directional beam of the service link antenna of the terrestrial base station to be directed in the estimated direction to the service link antenna of the upper-airspace relay type base station.

2. The mobile communication system according to claim 1,
wherein the relay communication station mounted on the flying body or the floating body is configured with a repeater relay apparatus that relays transmission and reception signals without regenerating them.

3. The mobile communication system according to claim 1,
wherein the relay communication station mounted on the flying body or the floating body is configured with a base station apparatus that regenerates transmission and reception signals, re-modulates the regenerated signals, and relays them.

4. The mobile communication system according to any one of claims 1 to 3, further comprising an inter-base station control apparatus that performs a control between the upper-airspace relay type base station and the terrestrial base station, and
wherein the inter-base station control apparatus adjusts each of transmission timings so that the transmission and the reception are reversed between respective base stations, by using time information of GNSS (Global Navigation Satellite System) received by the upper-airspace relay type base station and then received via a gateway apparatus, and time information of GNSS (Global Navigation Satellite System) received by the terrestrial base station.

5. The mobile communication system according to any one of claims 1 to 3, further comprising an inter-base station control apparatus that performs a control between the upper-airspace relay type base station and the terrestrial base station, and
wherein the mobile communication system transfers location information acquired by the GNSS (Global Navigation Satellite System) receiver mounted on the flying body or the floating body, to the terrestrial base station via the gateway apparatus and the inter-base station control apparatus, and the terrestrial base station estimates the direction to the service link antenna of the relay communication station with reference to location information on its own terrestrial base station.

6. The mobile communication system according to any one of claims 1 to 3,
wherein the terrestrial base station has an array antenna as the service link antenna, measures a radio-wave arrival direction from the service link antenna of the relay communication station using the array antenna, and estimates the direction to the service link antenna of the relay communication station, from a result of the measurement.

7. The mobile communication system according to any one of claims 1 to 3,
wherein the flying body or the floating body is a communications satellite, a UAV (Unmanned Aerial Vehicle) flying at an altitude of 18 km or less, or a HAPS flying in the stratosphere at an altitude of 18 km or more.
